# DEMANDE DE BREVET EUROPEEN

(11) **EP 3 838 612 A1**
(43) Date de publication de la demande: **23.06.2021**
(21) Numéro de dépôt: 20213171.0
(22) Date de dépôt: 10.12.2020
(51) Int. Cl.: B44C 3/00

(54) **PROCÉDÉ DE FABRICATION D'UNE PIÈCE DE VÉHICULE TRANSPARENTE OU DE CARROSSERIE**

(30) Priorité: 20.12.2019 FR 1915062
(71) Demandeur: Compagnie Plastic Omnium SE, 69007 Lyon (FR)
(72) Inventeur: GUILLIER, Stéphane, 01150 Sainte-Julie (FR)
(74) Mandataire: LLR

(57) **Abrégé**

Ce procédé de fabrication d'une pièce de véhicule (2) comprend les étapes suivantes :
- application d'une première couche de peinture (6) sur une face d'une pièce solide (4),
- chauffage de la première couche de peinture (6),
- application d'une seconde couche de peinture (6') sur la première couche de peinture (6),
- chauffage de la seconde couche de peinture (6'), et
- irradiation partielle de la seconde couche de peinture (6') avec un rayonnement laser (14) de manière à graver la seconde couche de peinture (6').

## Description

L'invention concerne une pièce de véhicule automobile. Plus particulièrement, l'invention concerne un procédé de fabrication d'une pièce de véhicule contribuant à l'aspect extérieur du véhicule.

Un véhicule comprend une carrosserie qui assure principalement des fonctions mécaniques qu'il n'est pas nécessaire de décrire tant elles sont bien connues. Les pièces qui composent cette carrosserie, les pièces de carrosserie, sont généralement opaques et très souvent peintes. Un véhicule comprend également plusieurs pièces transparentes destinées à transmettre de la lumière. Il s'agit notamment des pièces utilisées à des fins d'éclairage réglementaire, par exemple celles protégeant les blocs optiques des feux de route et de croisement ou bien des feux clignotants. Par ailleurs, le véhicule peut également présenter des sources de lumières prévues à d'autres fins. Ces pièces de carrosserie et ces pièces transparentes étant visibles de l'extérieur du véhicule, elles contribuent à l'esthétique générale du véhicule.

Afin que ces pièces aient un impact positif sur l'esthétique du véhicule, il est connu de traiter une surface externe des pièces afin d'améliorer leur aspect, notamment en leur donnant deux couleurs réparties selon des motifs prédéfinis, ce qui permet par exemple d'obtenir des véhicules communément appelés « bi-ton ». Une possibilité pour ce faire consiste à peindre la pièce d'une couleur puis à coller ou surmouler un film d'une seconde couleur sur la surface externe de la pièce, le film présentant un motif prédéfini. Une autre possibilité consiste à décorer la pièce par peinture et marouflage, ce qui permet d'obtenir un résultat similaire.

Ces options sont intéressantes mais peuvent poser problème. En effet, un film tel que décrit ci-dessus peut poser des problèmes de correspondance de couleur avec la peinture du véhicule, ce qui a un impact négatif sur l'esthétique du véhicule. En outre, un tel film ne permet pas d'obtenir le même rendu qu'une peinture, notamment en termes de brillance. Par ailleurs, le film est vulnérable à différentes sollicitations qui peuvent rapidement le détériorer, par l'exemple la photodégradation par exposition aux rayonnements ultraviolets du soleil, les rayures, le vieillissement ou le décollement. De plus, l'application du film selon l'une des manières présentées ci-dessus peut ne pas permettre d'obtenir un motif d'une précision aussi élevée que souhaitée, étant donné que l'application est complexe à réaliser, celle-ci étant généralement réalisée manuellement. En ce qui concerne le marouflage entre deux passages en chaine peinture, cela est très long et minutieux à réaliser et demande un temps de main d'œuvre élevé, donc ces véhicules bi-ton ne peuvent pas être proposés en série à un prix compétitif.

L'invention a notamment pour but de remédier à ce problème en proposant un procédé ne présentant pas les inconvénients, présentés ci-dessus, du film ou de la peinture après marouflage de l'art antérieur.

A cet effet, on prévoit selon l'invention un procédé de fabrication d'une pièce de véhicule comprenant les étapes suivantes :
- application d'une première couche de peinture sur une face d'une pièce solide,
- chauffage de la première couche de peinture,
- application d'une seconde couche de peinture sur la première couche de peinture,
- chauffage de la seconde couche de peinture, et
- irradiation partielle de la seconde couche de peinture avec un rayonnement laser de manière à graver la seconde couche de peinture.

On peut ainsi appliquer les deux couches de peinture sur toute la surface de la pièce solide puis retirer partiellement la seconde couche de peinture par gravure à l'aide du rayonnement laser selon un motif prédéfini choisi. On comprend que le laser permet de retirer la peinture afin d'obtenir un rendu plus précis et plus net qu'en mettant en œuvre l'un des procédés de l'art antérieur. De plus, grâce au fait que la couleur du revêtement soit donnée par de la peinture et non par un film comme dans l'art antérieur, on obtient une couleur et un rendu de meilleure qualité que le film. On s'affranchit également de la vulnérabilité du film aux différentes sollicitations ainsi que de la complexité de son application. En outre, l'invention permet de se dispenser de toute pièce rapportée dédiée spécifiquement à colorer la pièce de véhicule qui serait source de surcoût.

Avantageusement, le rayonnement laser présente une longueur d'onde comprise dans l'infrarouge, de préférence dans l'infrarouge proche.

Un tel rayonnement laser permet d'efficacement éliminer la couche de peinture.

Avantageusement, avant l'application de la première couche de peinture, on applique une couche de protection, réalisée dans un vernis apte à absorber ou réfléchir des rayonnements ultraviolets, sur la face de la pièce solide.

On protège ainsi la pièce solide des rayonnements ultraviolets qui pourraient la détériorer par photodégradation dans le cas où toutes les couches de peinture sont gravées dans une zone. De plus, cela permet de ne pas endommager la matière de la pièce solide avec l'irradiation par le rayonnement laser. Ce vernis permet aussi de protéger la zone gravée des rayures et de donner le niveau de brillance souhaité.

Avantageusement, après l'étape d'irradiation partielle de la seconde couche de peinture, on lustre la pièce de véhicule.

On améliore ainsi l'aspect des couches de peinture en limitant les effets de bord des zones irradiées. Spécifiquement, on atténue la forme en escalier des couches de peinture qui revêtent la pièce solide, ce qui contribue à rendre plus homogène son aspect de surface. En outre, si la pièce solide est formée par une pièce transparente, cela contribue à favoriser la transmission du faisceau lumineux à travers la pièce de véhicule de manière à maximiser son éclairement du fait de l'absence d'effet dit « loupe » que pourraient engendrer les effets de bord.

Avantageusement, après l'étape d'irradiation partielle de la seconde couche de peinture, on irradie partiellement la première couche de peinture avec le rayonnement laser de manière à graver la première couche de peinture.

Il est ainsi possible de graver la première couche de peinture afin d'obtenir un motif supplémentaire dans le motif défini dans la seconde couche de peinture, ce qui ouvre l'invention à des nouvelles applications. On peut par exemple laisser une partie de la surface de la pièce dépourvue de peinture. Dans le cas d'une pièce opaque, cela permet de faire apparaitre la couleur de la surface de la pièce solide. Et dans le cas d'une pièce transparente, cela permet la transmission de lumière.

Avantageusement, la pièce solide est formée par une pièce de carrosserie.

L'invention est ainsi adaptée pour décorer toute pièce de carrosserie du véhicule.

De préférence, la pièce de carrosserie est réalisée dans l'un des matériaux de la liste suivante : acier, aluminium, métal, plastique non chargé, plastique chargé en verre ou en carbone ou en toute autre matière, polymère thermoplastique, polypropylène, polymère thermodurcissable.

Ces matériaux conviennent pour fabriquer une pièce de carrosserie.

Avantageusement, la pièce solide comprend au moins un film plastronique surmoulé sur sa face.

En gravant les deux couches de peinture comme expliqué plus haut, on peut doter la pièce de véhicule d'une fonction tactile dans le motif gravé dans la première couche de peinture, par exemple en vue de commander certaines actions du véhicule.

Avantageusement, la pièce solide est formée par une pièce transparente.

L'invention est ainsi adaptée pour décorer les pièces utilisées à des fins d'éclairage réglementaire ou décoratif, ou bien les pièces de carrosserie transparentes. En outre, en gravant les deux couches de peinture comme expliqué plus haut, on peut ainsi décorer la pièce transparente par peinture tout en lui laissant la possibilité de transmettre de la lumière.

De préférence, on fabrique la pièce transparente par moulage d'un plastique, par exemple du polycarbonate, du polypropylène ou du poly(méthacrylate de méthyle).

La pièce transparente est ainsi simple à réaliser et peu onéreuse.

On prévoit également selon l'invention une pièce de véhicule obtenue par la mise en œuvre d'un procédé de fabrication tel que décrit dans ce qui précède.

### Brève description des figures

Des modes de réalisation de l'invention vont être décrits en se référant aux dessins annexés dans lesquels :
[Fig. 1] la figure 1 est une vue en section d'une première étape de la mise en œuvre d'un procédé de fabrication selon un premier mode de réalisation de l'invention,
[Fig. 2] la figure 2 est une vue en section d'une deuxième étape de la mise en œuvre du procédé de fabrication selon le premier mode de réalisation de l'invention,
[Fig. 3] la figure 3 est une vue en section d'une troisième étape de la mise en œuvre du procédé de fabrication selon le premier mode de réalisation de l'invention,
[Fig. 4] la figure 4 est une vue en section d'une première étape de la mise en œuvre d'un procédé de fabrication selon un second mode de réalisation de l'invention,
[Fig. 5] la figure 5 est une vue en section d'une deuxième étape de la mise en œuvre du procédé de fabrication selon le second mode de réalisation de l'invention,
[Fig. 6] la figure 6 est une vue en section d'une troisième étape de la mise en œuvre du procédé de fabrication selon le second mode de réalisation de l'invention, et
[Fig. 7] la figure 7 est une vue en section d'une quatrième étape de la mise en œuvre du procédé de fabrication selon le second mode de réalisation de l'invention.

### Description détaillée

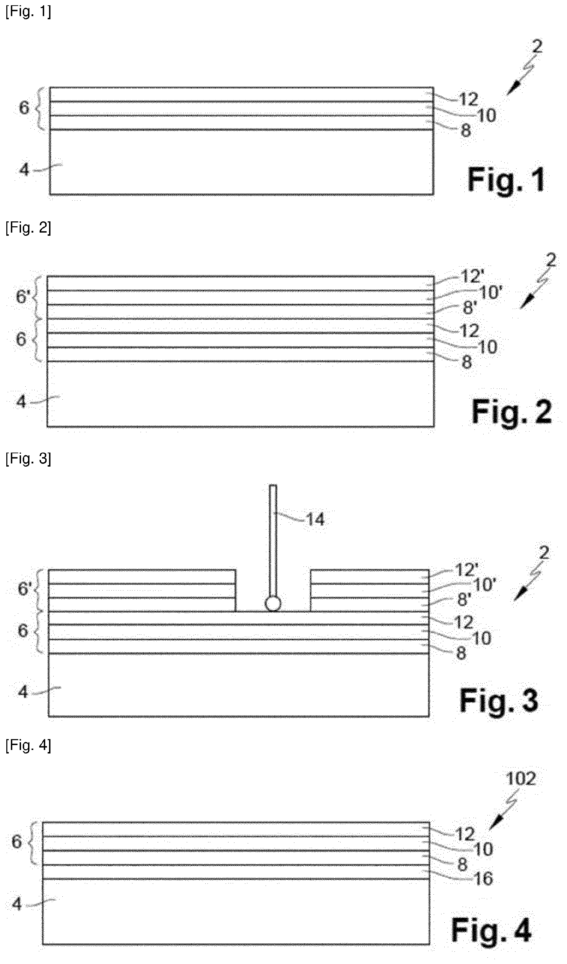

On a représenté sur la figure 1 une première étape d'un procédé de fabrication, d'une pièce de véhicule 2, selon un premier mode de réalisation de l'invention.

La pièce de véhicule 2 comprend une pièce solide 4. Par « solide » on entend que la pièce 4 est réalisée dans un matériau qui est à l'état solide à température ambiante et à pression atmosphérique, par exemple de l'acier, de l'aluminium ou un plastique. La pièce solide 4 en plastique peut être en thermoplastique, par exemple le polypropylène (PP), ou thermodurcissable, chargé ou non, les charges pouvant être par exemple en verre ou carbone ou toutes autres charges appropriées. La pièce solide 4 peut être formée par une pièce de carrosserie, donc généralement opaque, ou une pièce transparente notamment dans le cas où elle est destinée à protéger une source de lumière (non représentée). On peut également prévoir que la pièce solide 4 soit formée par une pièce de carrosserie transparente. On entend par « transparente » qu'elle est au moins translucide ou transparente à tout rayonnement lumineux présentant une longueur d'onde comprise dans le spectre visible, c'est-à-dire comprise entre environ 380 et 780 nm. Une telle pièce transparente peut être réalisée dans un plastique présentant cette caractéristique, en l'occurrence du polycarbonate communément désigné « PC ». On peut toutefois prévoir de réaliser la pièce transparente dans un tout autre plastique présentant cette caractéristique, par exemple le polypropylène (PP) ou le poly(méthacrylate de méthyle) (PMMA). La pièce transparente est réalisée par moulage. Un tel procédé étant connu, on ne le détaillera pas davantage dans ce qui suit.

La pièce de véhicule 2 comprend une première couche de peinture 6 qui est déposée sur la surface externe de la pièce solide 4. La peinture pour une pièce de véhicule 2 est adaptée au cahier des charges pour une utilisation extérieure. La peinture comprend généralement un primaire déposé sur la pièce qui permet de faire l'interface entre la surface extérieure de la pièce et la couche suivante et apporte aussi une opacité homogène, une base qui donne la couleur proprement dite, et un vernis qui protège des agressions extérieures et donne l'aspect final souhaité notamment le niveau de brillance. Ici, la première couche de peinture 6 comporte une sous-couche de primaire 8 sur laquelle est déposée une sous-couche de base 10 sur laquelle est déposée une sous-couche de vernis 12. La sous-couche de base 10 permet de colorer l'aspect extérieur de la pièce de véhicule 2. La sous-couche de primaire 8 permet d'améliorer l'opacité de la couche de peinture 6 et d'améliorer l'adhérence de la couche de base 10 à la pièce solide 4. La sous-couche de vernis 12 est réalisée dans un matériau apte à absorber ou réfléchir des rayonnements ultraviolets qui seraient susceptible de détériorer la couche de peinture 6 ou la pièce solide 4 par photodégradation. La sous-couche de vernis 12 permet entre outre de protéger la couche de peinture 6 ou la pièce solide de sollicitations mécaniques, par exemple de rayures, et d'augmenter la brillance de la couche de peinture 6. La sous-couche de vernis 12 est ici transparente à la lumière visible, c'est-à-dire tout rayon lumineux présentant une longueur d'onde comprise entre 390 nm et 710 nm.

Selon la première étape du procédé de fabrication de la pièce de véhicule 2, on dépose la première couche de peinture 6 sur la pièce solide 4. On chauffe ensuite la première couche de peinture 6 de manière à la faire réticuler.

On a représenté en figure 2 une deuxième étape du procédé de fabrication de la pièce de véhicule 2. Dans cette étape, on dépose, sur la première couche de peinture 6, une seconde couche de peinture 6'. Ici, la seconde couche de peinture 6' comporte une sous-couche de primaire 8' sur laquelle est déposée une sous-couche de base 10' sur laquelle est déposée une sous-couche de vernis 12'. La sous-couche de vernis 12' est ici transparente à la lumière visible, c'est-à-dire tout rayon lumineux présentant une longueur d'onde comprise entre 390 nm et 710 nm. De manière avantageuse, les sous-couches de base 10, 10' des deux couches de peinture 6, 6' présentent des couleurs différentes.

On chauffe ensuite la seconde couche de peinture 6' de manière à la faire réticuler.

On a représenté en figure 3 une troisième étape du procédé de fabrication de la pièce de véhicule 2. Dans cette étape, on irradie une partie de la pièce de véhicule 2 à l'aide d'un rayonnement laser 14 de manière à graver la seconde couche de peinture 6' mais sans graver la première couche de peinture 6. Cette gravure est effectuée dans toute l'épaisseur de la seconde couche de peinture 6'. Cette opération est communément désignée par les termes anglo-saxons « laser-etching » pouvant être traduits par « gravure au laser ». Le rayonnement laser 14 présente une longueur d'onde comprise dans l'infrarouge, c'est-à-dire comprise entre 700 nm et 20000 nm dans le cadre de l'invention. Un exemple de tel rayonnement laser est celui communément désigné « laser CO₂ » qui présente une longueur d'onde de 10600 nm. De préférence, la longueur d'onde du rayonnement laser 14 est comprise dans l'infrarouge proche, c'est-à-dire comprise entre 700 et 2000 nm. Dans ce cas et si la sous-couche de vernis 12 de la première couche de peinture 6 est transparente au rayonnement laser 14, ce dernier présente l'avantage de ne pas graver la première couche de peinture 6. On évite ainsi un risque d'endommagement de la première couche de peinture 6.

L'irradiation est réalisée uniquement dans une partie de la pièce de véhicule 2 dans le sens où elle est réalisée selon un motif prédéfini de la seconde couche de peinture 6'. Elle est commandée de sorte que la seconde de couche de peinture 6' soit irradiée, donc éliminée dans le motif et dans toute son épaisseur, mais pas la première couche de peinture 6. Même si la sous-couche de vernis 12' de la seconde couche de peinture 6' est réalisée dans un matériau transparent au rayonnement laser 14, l'irradiation des sous-couches de primaire 8' et de base 10' sous-jacentes permet d'éliminer la seconde couche de peinture 6' dans le motif.

Après l'irradiation, la surface de la pièce de véhicule 2 présente deux niveaux.

Dans la zone du motif prédéfini, la pièce solide 4 est revêtue uniquement de la première couche de peinture 6. Dans cette zone, l'extérieur de la pièce de véhicule 2 présente la couleur de la sous-couche de base 10 de la première couche de peinture 6.

En dehors de la zone du motif prédéfini, la pièce transparente 4 est revêtue de la première couche de peinture 6 et de la seconde couche de peinture 6'. Dans cette zone, l'extérieur de la pièce de véhicule présente la couleur de la sous-couche de base 10' de la seconde couche de peinture 6'.

Après cette étape d'irradiation, on peut prévoir une étape supplémentaire de lustrage de la pièce de véhicule 2. Ce lustrage permet d'arrondir les coins formés par la gravure effectuée lors de l'étape d'irradiation, et donc d'améliorer l'esthétique de la pièce de véhicule 2 et son aspect de surface au toucher ainsi que sa tenue dans le temps, en limitant les zones d'accroché en arrondissant les coins.

On a représenté sur la figure 4 une première étape d'un procédé de fabrication, d'une pièce de véhicule 102, selon un second mode de réalisation de l'invention. Dans ce qui suit, on ne décrira que ce qui le démarque du procédé selon le premier mode de réalisation. Les éléments similaires au premier mode de réalisation portent des références numériques identiques.

La pièce de véhicule 102 comprend une couche de protection 16, réalisée dans un vernis apte à absorber ou réfléchir des rayonnements ultraviolets, qui est déposée sur la surface externe de la pièce solide 4. La couche de protection 16 est transparente à la lumière visible, c'est-à-dire tout rayon lumineux présentant une longueur d'onde comprise entre 390 nm et 710 nm.

Selon la première étape du procédé de fabrication de la pièce de véhicule 102, on dépose la couche de protection 16 puis la première couche de peinture 6 sur la pièce solide 4. On chauffe ensuite la première couche de peinture 6 de manière à la faire réticuler.

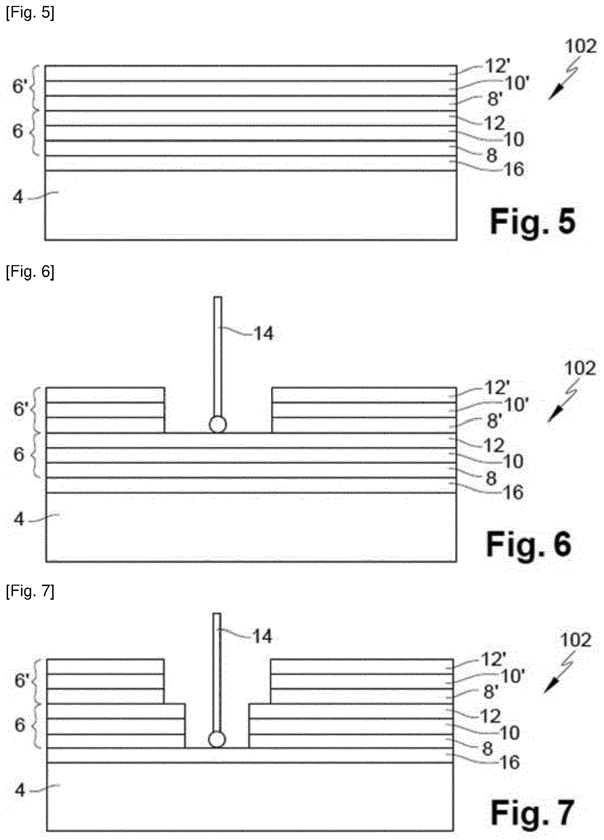

On a représenté en figure 5 une deuxième étape du procédé de fabrication de la pièce de véhicule 102. Dans cette étape, on dépose, sur la première couche de peinture 6, une seconde couche de peinture 6'. Ici, la seconde couche de peinture 6' comporte une sous-couche de primaire 8' sur laquelle est déposée une sous-couche de base 10' sur laquelle est déposée une sous-couche de vernis 12'. De manière avantageuse, les sous-couches de base 10, 10' des deux couches de peinture 6, 6' présentent des couleurs différentes.

On chauffe ensuite la seconde couche de peinture 6' de manière à la faire réticuler.

On a représenté en figure 6 une troisième étape du procédé de fabrication de la pièce de véhicule 102. Dans cette étape, on effectue une première gravure par irradiation d'une partie de la pièce de véhicule 102 à l'aide du rayonnement laser 14. Cela permet de graver la seconde couche de peinture 6' sans graver la première couche de peinture 6. Cette première gravure est effectuée dans toute l'épaisseur de la seconde couche de peinture 6'.

La première gravure est réalisée uniquement dans une partie de la pièce de véhicule 102 dans le sens où elle est réalisée selon un motif, dit distal, prédéfini de la seconde couche de peinture 6'.

Après cette première gravure, la surface de la pièce de véhicule 102 présente deux niveaux.

Dans la zone du motif distal, la pièce solide 4 est revêtue de la couche de protection 16 et de la première couche de peinture 6. Dans cette zone, l'extérieur de la pièce de véhicule présente la couleur de la sous-couche de base 10 de la première couche de peinture 6.

En dehors de la zone du motif distal, la pièce transparente 4 est revêtue de la couche de protection 16, de la première couche de peinture 6 et de la seconde couche de peinture 6'. Dans cette zone, l'extérieur de la pièce de véhicule 102 présente la couleur de la sous-couche de base 10' de la seconde couche de peinture 6'.

On a représenté en figure 7 une quatrième étape du procédé de fabrication de la pièce de véhicule 102. Dans cette étape, on effectue une seconde gravure par irradiation d'une partie de la pièce de véhicule 102 à l'aide du rayonnement laser 14. Cela permet de graver la première couche de peinture 6 sans graver la couche de protection 16 ni la pièce solide 4. Cette gravure est effectuée dans toute l'épaisseur de la première couche de peinture 6.

La seconde gravure est réalisée uniquement dans une partie de la pièce de véhicule 102 dans le sens où elle est réalisée selon un motif, dit proximal, prédéfini de la première couche de peinture 6. Le motif proximal est inclus, au sens géométrique du terme, dans le motif distal.

Après cette deuxième gravure, la surface de la pièce de véhicule 102 présente trois niveaux.

Dans la zone du motif proximal, la pièce solide 4 est revêtue uniquement de la couche de protection 16. Dans cette zone, la pièce de véhicule 102 n'est pas peinte.

Dans la zone du motif distal mais en dehors de la zone du motif proximal, la pièce solide 4 est revêtue de la couche de protection 16 et de la première couche de peinture 6. Dans cette zone, l'extérieur de la pièce de véhicule 102 présente la couleur de la sous-couche de base 10 de la première couche de peinture 6.

En dehors des zones des motifs proximal et distal, la pièce transparente 4 est revêtue de la couche de protection 16, de la première couche de peinture 6 et de la seconde couche de peinture 6'. Dans cette zone, l'extérieur de la pièce de véhicule 102 présente la couleur de la sous-couche de base 10' de la seconde couche de peinture 6'.

Après la seconde gravure, on peut prévoir une étape supplémentaire de lustrage de la pièce de véhicule 102.

Ce second mode de réalisation est particulièrement adapté dans le cas où la pièce solide 4 est formée par une pièce transparente, par exemple destinée à protéger une source de lumière. En effet, dans la zone du motif proximal, la pièce transparente 4 permet la transmission d'un faisceau émis de la source de lumière vers l'environnement extérieur à travers la couche de protection 16. En dehors du motif proximal, le faisceau lumineux est absorbé par la première couche de peinture 6. Ainsi, la forme du motif proximal est la forme donnée au faisceau lumineux. On comprend donc qu'on peut facilement personnaliser l'esthétique du faisceau lumineux.

Selon une variante de réalisation du second mode, la pièce de véhicule 102 comprend un film, embarquant de l'électronique, surmoulé sur la face de la pièce solide 4. Un tel film, communément désigné « film plastronique » ou « film fonctionnalisé », permet d'intégrer toutes sortes de fonctions directement sur la pièce de véhicule 102. On peut citer des fonctions électronique, mécanique, optique, d'éclairement, de dégivrage et de connexion électrique à titre d'exemples. Le film plastronique comprend une partie fonctionnalisée portée par un substrat en polymère flexible permettant une déformation de la partie fonctionnalisée. Le substrat peut être par exemple être réalisé en polyimide (PI), en polyétheréthercétone (PEEK) ou en polyéthylène naphtalate (PEN).

Ce film plastronique peut comprendre des composants tels que des diodes électroluminescentes, des capteurs capacitifs, des émetteurs-récepteurs NFC (sigle pour les termes anglo-saxons « Near field communication »). Le film est interposé entre la pièce solide 4 et la couche de protection 16. De manière connue en soi, le film peut être configuré pour réagir à l'application de pression par un doigt d'un utilisateur, la couche de protection 16 n'empêchant pas cette commande. Ainsi, dans la zone du motif proximal, l'utilisateur peut interagir avec le film plastronique afin de commander certaines fonctions du véhicule portant la pièce de véhicule 102. Il peut s'agir d'une commande d'allumage de phare ou bien d'une commande d'ouverture d'une portière pour ne citer que deux exemples.

L'invention n'est pas limitée aux modes de réalisation présentés et d'autres modes de réalisation apparaîtront clairement à l'homme du métier.

En dotant la première couche de peinture d'un primaire transparent ou bien d'une base sans primaire (on parle alors de base dite « primerless »), le motif n'apparait que lorsque qu'une source de lumière, associée à la pièce de véhicule, est allumée. Cela donne un effet esthétique certain à la pièce de véhicule. Cet effet est communément appelé « hidden-until-lit ».

### Liste de références

2 ; 102 : pièce de véhicule
4 : pièce solide
6 : première couche de peinture
6' : seconde couche de peinture
8, 8' : sous-couche de primaire
10, 10' : sous-couche de base
12, 12' : sous-couche de vernis
14 : rayonnement laser
16 : couche de protection

## Revendications

1. Procédé de fabrication d'une pièce de véhicule (2 ; 102), **caractérisé en ce qu'**il comprend les étapes suivantes :
- application d'une première couche de peinture (6) sur une face d'une pièce solide (4),
- chauffage de la première couche de peinture (6),
- application d'une seconde couche de peinture (6') sur la première couche de peinture (6),
- chauffage de la seconde couche de peinture (6'), et
- irradiation partielle de la seconde couche de peinture (6') avec un rayonnement laser (14) de manière à graver la seconde couche de peinture (6').

2. Procédé selon la revendication précédente, dans lequel le rayonnement laser (14) présente une longueur d'onde comprise dans l'infrarouge, de préférence dans l'infrarouge proche.

3. Procédé selon l'une quelconque des revendications précédentes, dans lequel, avant l'application de la première couche de peinture (6), on applique une couche de protection (16), réalisée dans un vernis apte à absorber ou réfléchir des rayonnements ultraviolets, sur la face de la pièce solide (4).

4. Procédé selon l'une quelconque des revendications précédentes, dans lequel après l'étape d'irradiation partielle de la seconde couche de peinture (6'), on lustre la pièce de véhicule (2 ; 102).

5. Procédé selon l'une quelconque des revendications précédentes, dans lequel après l'étape d'irradiation partielle de la seconde couche de peinture (6'), on irradie partiellement la première couche de peinture (6) avec le rayonnement laser (14) de manière à graver la première couche de peinture (6).

6. Procédé selon l'une quelconque des revendications précédentes, dans lequel la pièce solide (4) est formée par une pièce de carrosserie.

7. Procédé selon la revendication précédente, dans lequel la pièce de carrosserie est réalisée dans l'un des matériaux de la liste suivante : acier, aluminium, métal, plastique non chargé, plastique chargé en verre ou en carbone, polymère thermoplastique, polypropylène, polymère thermodurcissable.

8. Procédé selon l'une quelconque des revendications précédentes, dans lequel la pièce solide (4) comprend au moins un film plastronique surmoulé sur sa face.

9. Procédé selon l'une quelconque des revendications précédentes, dans lequel la pièce solide (4) est formée par une pièce transparente.

10. Procédé selon la revendication précédente, dans lequel on fabrique la pièce transparente par moulage d'un plastique, par exemple du polycarbonate, du polypropylène ou du poly(méthacrylate de méthyle).

11. Pièce de véhicule (2 ; 102), **caractérisée en ce qu'**elle est obtenue par la mise en œuvre d'un procédé de fabrication selon l'une quelconque des revendications précédentes.
